# EUROPÄISCHE PATENTSCHRIFT

(11) **EP 1 414 667 B1**
(45) Veröffentlichungstag und Bekanntmachung des Hinweises auf die Patenterteilung: **28.04.2010**
(21) Anmeldenummer: 02766915.9
(22) Anmeldetag: 07.08.2002
(51) Int. Cl.: B60M 1/20, B60M 1/12

(54) **ANORDNUNG ZUR LAGEÄNDERUNG VON FAHRLEITUNGEN**
ARRANGEMENT FOR CHANGING THE POSITION OF OVERHEAD WIRES
SYSTEME DESTINE A MODIFIER LA POSITION DE CATENAIRES

(30) Priorität: 10.08.2001 AT 12592001
(43) Veröffentlichungstag der Anmeldung: 06.05.2004
(73) Patentinhaber: BICC Holdings GmbH, 12459 Berlin (DE)
(72) Erfinder: WIMMER, Günther, A-8200 Gleisdorf (AT)
(74) Vertreter: Müllner, Martin
(86) Internationale Anmeldenummer: PCT/AT2002/000237
(87) Internationale Veröffentlichungsnummer: WO 2003/013898

(56) Entgegenhaltungen:
- EP-A- 0 474 547
- EP-A- 0 489 627
- DE-A- 1 803 762

## Beschreibung

### TECHNISCHES GEBIET

Die Erfindung betrifft eine Anordnung zur Lageänderung von Fahrleitungen aus dem Bereich der Versorgung eines Schienenfahrzeuges mit elektrischer Energie, wobei die Fahrleitung mit Hilfe einer Auslegerkonstruktion an Masten neben einer Gleisanlage aufgehängt ist.

### STAND DER TECHNIK

Im Bereich der Eisenbahnen ist heute schon fast das ganze Schienennetz mit einer elektrischen Fahrleitung (auch als Oberleitung bezeichnet) ausgerüstet. Die meisten verkehrenden Lokomotiven werden mit elektrischer Energie angetrieben und Diesellokomotiven verlieren im allgemeinen Fahrbetrieb immer mehr an Bedeutung. Ihr Schwerpunkt liegt beim Verschub. Im Gütertransport werden Container verwendet, welche in der Güterverladung bevorzugt mit sogenannten Portalkränen umgelagert werden. Der Portalkran fährt dabei genau über den Container, ergreift diesen und bringt ihn zu einem gewünschten Lagerplatz bzw. Eisenbahnwaggon.

Das vertikale Hochheben ist bei Gleisanlagen mit Fahrleitung somit nicht möglich. Auch Hubeinrichtungen anderer Bauart können aus Kollisionsgründen mit der Fahrleitung nicht herangezogen werden. Daher verwendet man für das Verschieben der Güterwaggons im Verladebereich Diesellokomotiven, da diese ohne Fahrleitung betrieben werden können und lässt im Verladebereich die Oberleitung zur Gänze weg. Typische Verladebahnhöfe weisen solche oberleitungslosen Gleiskörper auf. Wenn in einem Bahnhofsbereich ein Gleiskörper nicht permanent dem Verladen gewidmet ist, dann ist es sinnvoll, die Fahrleitung aus dem Verladebereich verlagern zu können.

Aus der deutschen Offenlegungsschrift DE 1 803 762 sind Varianten zum Verschieben einer elektrischen Oberleitung bei einer Gleisanlage, über die Breite einer Verladeeinrichtung, z.B. eines Portalkranes für Containerverladung, bekannt. Das Verschieben erfolgt entweder durch Hochziehen oder durch Zusammenfalten einer Auslegerkonstruktion. Bedingt durch die Geometrie der Konstruktion ist ein komplettes Freimachen des Ladebereichs über den Gleisanlagen nicht möglich.

Aus der europäischen Patentschrift EP 0 489 627 B1, bzw. aus deren deutscher Übersetzung DE 691 01 772 T2 ist eine horizontal schwenkbare Oberleitung bekannt, deren Auslegerkonstruktion in weggeschwenkter Position ebenfalls die Gleisanlage nicht zur Gänze freimacht.

### OFFENBARUNG DER ERFINDUNG

Die Erfindung zielt darauf ab, eine Gleisanlage in einem allfälligen Verladebereich so auszustatten, dass das vertikale Verladen von z.B. Containern mittels Portalkränen oder Hubeinrichtungen und eine durchgehende Traktion von Zügen unter der Verwendung von Elektrolokomotiven abwechselnd möglich sind.

Dies wird bei einer Anordnung zur Lageänderung von Fahrleitungen durch die Merkmale des Anspruchs 1 erreicht. Bevorzugte Ausgestaltungen sind in den abhängigen Ansprüchen definiert. Die Auslegerkonstruktion ist an den Masten hochschwenkbar. Ein Hochschwenken bzw. vertikales Drehen der Auslegerkonstruktion, gemeinsam mit der Fahrleitung um 90°, ermöglicht ein vollständiges Freimachen des Verladebereiches über den Waggons der Gleisanlage und ein ungehindertes Bewegen und Laden mit Hebezeugen, z.B. eines Portalkranes entlang der Gleise. So gelingt es, aus dem Bahnnetz in einen Güterverladebahnhof mit einer einem Güterzug vorgespannten Elektrolokomotive in eine Verladezone einzufahren, die Energieversorgung abzuschalten, die Fahrleitung hochzuklappen und die Be- und Entladung der Güterwaggons mit einem Hebezeug durchzuführen. Nach erfolgtem Laden kann sogleich, nach Herunterklappen der Auslegerkonstruktion mit der Fahrleitung, mit der in der Ladezone verbliebenen Elektrolokomotive nach Anspeisung der Fahrleitung ausgefahren werden. Es wird somit keine wertvolle Zeit durch den zweifachen Wechsel der Elektrolokomotive auf eine Diesellokomotive im Verladebereich verloren.

Die Auslegerkonstruktion umfaßt eine Tragsäule, die an einem zweiarmigen, am Mast gelagerten Hebel befestigt ist, wobei das Lager insbesondere als Stehlager ausgebildet und auf einer Plattform an einer Mastspitze vorgesehen ist. Die Lagerung umfasst zwei beabstandete Stehlagerböcke, welche in ihrer Drehachse den Hebel aufnehmen. Dabei ist die Auslegerkonstruktion, insbesondere die Tragsäule derselben; mit dem Lastarm und ein linearer Antrieb mit dem Kraftarm des zweiarmigen Hebels verbunden.

Es ist besonders zweckmäßig, wenn der Hebel als Winkelhebel, mit vorzugsweise 135° Neigungswinkel der Hebelsarme zueinander, ausgeführt ist.

Eine Ausführungsform sieht vor, dass das Hochschwenken durch einen linearen Antrieb erfolgt, welcher einen Elektromotor mit Spindeltrieb umfasst, wobei bei Anordnung mehrerer Masten mit schwenkbaren Auslegerkonstruktionen, die Antriebe an eine Synchronlaufsteuer- und Überwachungseinheit angeschlossen sind. Besonders wichtig ist die synchrone Ansteuerung der Schwenkantriebe der entlang der Verladezone angeordneten, hochschwenkbaren Auslegerkonstruktionen um ein Reißen der Fahrleitung zu vermeiden. Die Synchronlaufsteuer- und Überwachungseinheit überwacht Gleichlauf und Drehzahl der elektrischen Motore der Schwenkantriebe. Weicht eine Kennzahl deutlich ab, wird das Hochschwenken aller Auslegerkonstruktionen gestoppt und ein Alarm ausgelöst.

Ein weiteres Merkmal der Erfindung ist, dass die Achsen der Lager für das Hochschwenken und die Position der Spanneinrichtungen an den Enden einer Fahrleitungshalbsektion auf einer Drehachse liegen.

Durch diese Anordnung erreicht man, dass während des Hochklappens der Auslegerkonstruktion mit der Fahrleitung, diese entlang eines Viertelkreises, dessen Mittelpunkt in der gemeinsamen Drehachse von Stehlager und Position der Spanneinrichtungen am Ende einer Fahrleitungshalbsektion liegen, geführt wird und somit immer der gleiche Abstand zwischen Position der Spanneinrichtungen am Ende einer Fahrleitungshalbsektion und der Fahrleitungsaufhängung an der Auslegerkonstruktion eingehalten wird. Es kommt nicht zum Verziehen und die gesamte Anordnung verhält sich neutral.

### KURZE BESCHREIBUNG DER ZEICHNUNGEN

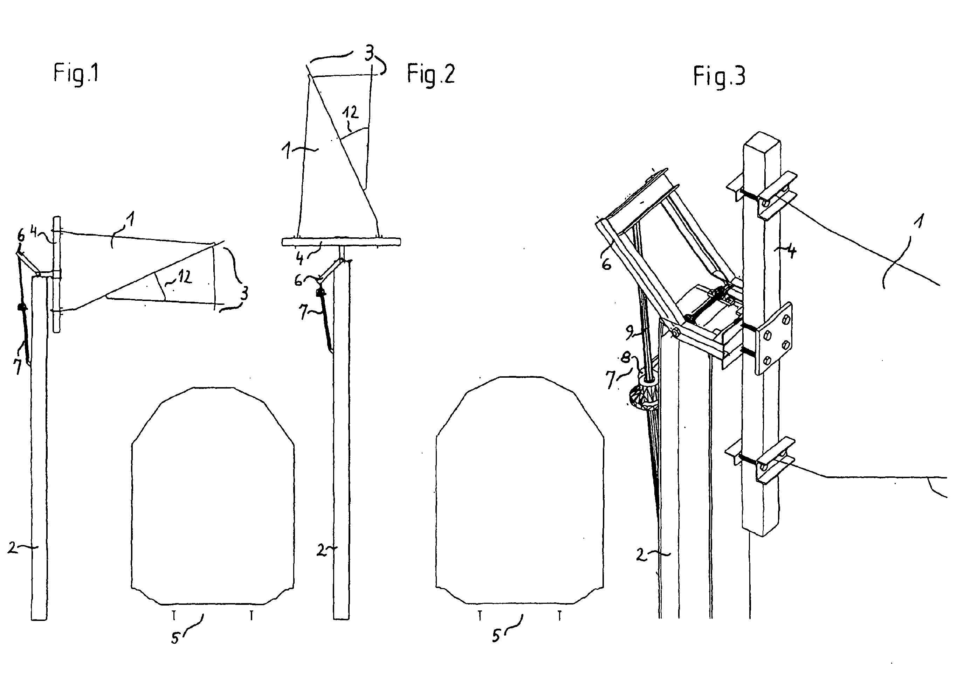

Ein Ausführungsbeispiel des Erfindungsgegenstandes ist in den Fig. 1 bis 4 dargestellt.

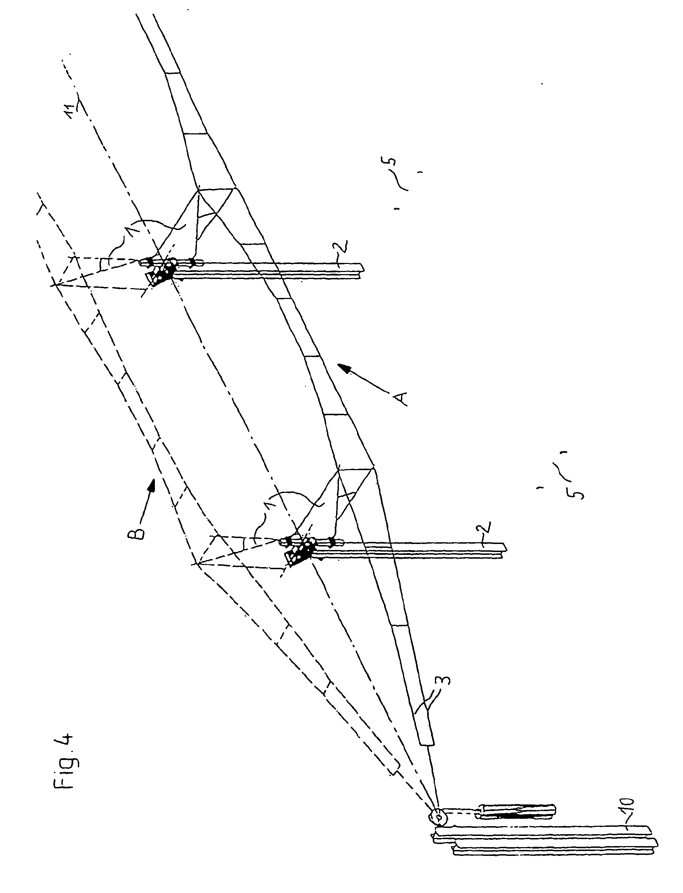

Fig. 1 zeigt in einer Seitenansicht das Bahnprofil und einen Mast mit Auslegerkonstruktion in der abgesenkten Position, also in der Lage für den elektrischen Fahrbetrieb, Fig. 2 den gleichen Inhalt der Fig. 1, jedoch mit hochgeschwenkter Auslegerkonstruktion für den Ladebetrieb, Fig. 3 ein Detail des schwenkbaren Mastkopfes in perspektivischer Darstellung und Fig. 4 eine Anordnung von Masten mit abgesenkter sowie hochgeschwenkter Fahrleitung in perspektivischer Darstellung.

### BESTE AUSFÜHRUNGSFORM DER ERFINDUNG

Fig. 1 zeigt eine Auslegerkonstruktion 1 an einem Mast 2, die die Fahrleitung 3 über ein Druckrohr, ein Strebenrohr, ein Tragrohr, einen Hänger und im Besonderen ein Stützrohr 12 und eine drehbar gelagerte Tragsäule 4 für den Fahrbetrieb in einer gewünschten Position hält. Die von der Auslegerkonstruktion 1 überspannte Gleisanlage 5 ist für elektrisch betriebene Zugfahrzeuge somit befahrbar.

Möchte man in Verladebereichen, wie z.B. in Güterbahnhöfen mit einem Kran, im Besonderen einen Portalkran, Güterwaggons von oben be- und entladen, verhindert die unter Hochspannung stehende Fahrleitung 3 dieses Vorhaben. Wie in Fig. 2 dargestellt, kann man mit der hochschwenkbaren Auslegerkonstruktion 1 den Bereich über der Gleisanlage 5, bzw. den Güterwaggons, komplett freimachen und ermöglicht dadurch die Ent- und Beladung durch einen Portalkran von oben. Das Freimachen der Gleisanlage 5 einer ganzen Verladezone, z.B. der Ladezone eines Portalkranes, erfolgt durch Anordnung mehrerer Masten 2 mit schwenkbarer Auslegerkonstruktion 1 entlang der Strecke mit jeweils einer Spanneinrichtung am Anfang und am Ende des hochschwenkbaren Bereiches. Der Mastabstand für gerade Gleisstrecken beträgt ca. 40-70 m. Die maximale Länge einer durchgehenden Fahrleitung 3 beträgt ca. 800 m (Fahrleitungshalbsektion). Berücksichtigt man an beiden Seiten des hochschwenkbaren Fahrleitungsbereiches ein Mastfeld zum Abspannen der Fahrleitung und ein Mastfeld zur Fahrleitungsüberlappung mit dem fixen Fahrleitungsnetz, jeweils mit einem minimalen Mastabstand, ergibt sich ein nutzbarer Bereich für den Ladebereich von ca. 600 m mit einer durchgehenden Fahrleitung 3. Größere Längen für den Ladebereich erhält man z.B. durch Hintereinanderschalten mehrerer hochschwenkbarer Fahrleitungshalbsektionen. Fig. 3 zeigt die konstruktive Ausbildung des Mastkopfes mit der hochschwenkbaren Auslegerkonstruktion im Detail. Der mit der Tragsäule 4 am Lastarm verbundene Winkelhebel 6 weist vorzugsweise zwischen seinen beiden Armen einen Winkel von 135° Neigung auf. Der Kraftarm des Winkelhebels ist mit einem Ende eines linearen Antriebes bzw. Schwenkantriebes 7 über ein Gelenk verbunden. Dieser Antrieb ist an seinem Fußpunkt mit dem Mast 2 verbunden und umfasst hier im Ausführungsbeispiel einen Elektromotor 8 mit einem Spindeltrieb 9. Wird die Spindel in den Schwenkantrieb 7 eingefahren, schwenkt die Auslegerkonstruktion 1 mit dem Winkelhebel 6 in die senkrechte Lage, der Ladebereich ist kollisionsfrei und der Ladebetrieb kann beginnen. Fährt die Spindel aus dem Schwenkantrieb 7, schwenkt die Auslegerkonstruktion 1 zurück in die waagrechte Lage und der Fahrleitung 3 ist wieder in der Position, um einen elektrischen Kontakt zu einem Stromabnehmer des elektrischen Schienenfahrzeuges herzustellen. Somit können Züge durchfahren. Das Auf- und Abschwenken der entlang der Verladezone angeordneten, hochschwenkbaren Auslegerkonstruktionen 1 wird durch eine Synchronlaufsteuer- und Überwachungseinheit gestartet, überwacht und beim Erreichen der gewünschten Endposition wieder angehalten. Weiters werden Gleichlauf und Drehzahl der elektrischen Antriebsmotore des Schwenkantriebes 7 gemessen und miteinander verglichen und so z.B. ein Steckenbleiben bzw ein Totalausfall im Zuge einer Störung eines Schwenkantriebes 7 festgestellt. Nach dem Feststellen eines Fehlers bzw. dem asynchronen Lauf eines. Elektromotors 8, werden alle Schwenkantriebe 7 angehalten und eine Fehlermeldung signalisiert. Sobald der Fehler diagnostiziert und behoben ist, kann der Betrieb wieder aufgenommen und ein Schwenken ausgeführt werden.

Die Steuereinheit stellt in der waagrechten Positionierung ein Freigabesignal für das z.B. händische Einschalten der Spannungsversorgung des hochschwenkbaren Leitungsabschnittes zur Verfügung. Des Weiteren verhindert die Steuereinheit das Vorhandensein einer Spannung im hochschwenkenden oder hochgeschwenkten Zustand. Fig. 4 zeigt eine Anordnung von einem Spannmast 10 und zwei Masten 2 mit hochschwenkbarer Auslegerkonstruktion 1. Variante A zeigt die waagrechte Positionierung der Fahrleitung 3 mit der Auslegerkonstruktion 1, welche für den Fahrbetrieb Verwendung findet. Variante B zeigt die senkrechte Positionierung der Fahrleitung 3 mit der Auslegerkonstruktion 1, welche für Ent- und Beladen der Güter- bzw. Containerwaggons benötigt wird.

Durch die eingezeichnete Drehachse 11 wird verdeutlicht, dass sich die Fahrleitung 3 in einer Kreisbewegung um die Drehachse 11 bewegt, und dass dadurch keine Längenänderung zwischen dem Abspannpunkt des Spannmastes 10 und der hochschwenkbaren Auslegerkonstruktion 1 während des Schwenkens besteht.

Als weitere Einsatzorte des Erfindungsgegenstandes sind Montage-, Reparatur- und Waschgleise oder Querungen von Gleisen, für die kurzzeitig höhere Durchfahrtshöhen, als der normale Gleis-Fahrleitung-Höhenabstand, erforderlich sind sowohl für elektrische Eisenbahnen als auch Omni-Busse denkbar.

## Patentansprüche

1. Gruppe von Masten (2), die gemeinsam eine
Fahrleitungssektion tragen, mit jeweils einer Anordnung zur Lageänderung von Fahrleitungen (3) aus dem Bereich der versorgung eines Schienenfahrzeuges mit elektrischer Energie, wobei die Fahrleitung (3) mit Hilfe einer Auslegerkonstruktion (1) an den Masten (2) neben einer Gleisanlage (5) aufgehängt ist und die Auslegerkonstruktion (1) an den Masten (2) hochschwenkbar vorgesehen ist,
**dadurch gekennzeichnet, dass** die Achsen der Lager für das Hochschwenken und die Position der Spanneinrichtungen an den Enden der Fahrleitungssektion auf einer Drehachse (11) liegen.

2. Gruppe von Masten nach Anspruch 1, **dadurch gekennzeichnet, dass** bei zumindest einem der Masten (2) die Anordnung einen zweiarmigen Hebel umfasst, dass die Auslegerkonstruktion (1) eine Tragsäule (4), ein Druckrohr und ein Strebenrohr umfasst, wobei die Tragsäule (4) an dem zweiarmigen, am Mast (2) gelagerten Hebel befestigt ist und wobei an der Tragsäule (4) das Druckrohr und das Strebenrohr in Abstand zueinander befestigt sind, und dass das Lager insbesondere als Stehlager ausgebildet und auf einer Plattform an einer Mastspitze vorgesehen ist.

3. Gruppe von Masten nach Anspruch 1 oder 2, **dadurch gekennzeichnet, dass** die Auslegerkonstruktion (1), insbesondere die Tragsäule (4) derselben, mit dem Lastarm und ein linearer Antrieb mit dem Kraftarm des zweiarmigen Hebels verbunden ist.

4. Gruppe von Masten nach einem der Ansprüche 1 bis 3, **dadurch gekennzeichnet, dass** der Hebel als Winkelhebel (6) mit vorzugsweise 135° Neigungswinkel der Hebelarme (2) zueinander ausgeführt ist.

5. Gruppe von Masten nach einem der Ansprüche 1 bis 4, **dadurch gekennzeichnet, dass** der lineare Antrieb für das Hochschwenken einen Elektromotor (8) mit Spindeltrieb (9) (9) umfasst, wobei die Antriebe mehrere Masten an eine Synchronlaufsteuer- und Überwachungseinheit angeschlossen sind.

## Claims

1. Group of poles (2), which together carry an overhead line section, each with an arrangement for changing the position of overhead lines (3) from the region of the electrical energy supply of a rail vehicle, the overhead line (3) being suspended with the aid of an arm construction (1) on the poles (2) next to a track system (5) and the arm construction (1) being provided such that it can be pivoted up on the poles (2), **characterised in that** the axes of the bearings for pivoting up and the position of the clamping devices at the ends of the overhead line section are located on a rotational axis (11).

2. Group of poles according to claim 1, **characterised in that** in at least one of the poles (2), the arrangement comprises a two-armed lever, **in that** the arm construction (1) comprises a support post (4), a pressure pipe and a strut pipe, the support post (4) being fastened to the two-armed lever mounted on the pole (2) and the pressure pipe and the strut pipe being fastened at a spacing from one another on the support post (4), and **in that** the bearing is, in particular, configured as a vertical bearing and is provided on a platform on a pole tip.

3. Group of poles according to claim 1 or 2, **characterised in that** the arm construction (1), in particular the support post (4) thereof, is connected to the load arm and a linear drive is connected to the force arm of the two-armed lever.

4. Group of poles according to any one of claims 1 to 3, **characterised in that** the lever is designed as an angle lever (6) with a preferably 135° angle of inclination of the lever arms (2) with respect to one another.

5. Group of poles according to any one of claims 1 to 4, **characterised in that** the linear drive for pivoting up comprises an electric motor (8) with a spindle drive (9), the drives of a plurality of poles being connected to a synchronously running control and monitoring unit.

## Revendications

1. Groupe de pylônes (2), portant conjointement une section de caténaire, comprenant respectivement un aménagement de changement de position de caténaires (3) à partir de la zone d'alimentation d'un véhicule ferroviaire en énergie électrique, dans lequel le caténaire (3) est suspendu à l'aide d'une pièce de maintien (1) sur les pylônes (2) à côté de voies ferrées (5) et la pièce de maintien (1) est prévue pivotable vers le haut sur les pylônes (2), **caractérisé en ce que** les axes des paliers pour le pivotement vers le haut et la position des dispositifs de tension aux extrémités de la section de caténaire se situent sur un axe de rotation (11).

2. Groupe de pylônes selon la revendication 1, **caractérisé en ce que**, pour au moins l'un des pylônes (2), l'aménagement comprend un levier à deux bras, **en ce que** la pièce de maintien (1) comprend une colonne portante (4), un barre de compression et une barre de soutènement, la colonne portante (4) étant fixée sur le levier à deux bras monté sur le pylône (2) et la barre de compression et la barre de soutènement étant fixées à distance l'un de l'autre sur la colonne portante (4), et **en ce que** le palier est conformé en particulier en chaise-palier et prévu sur une plate-forme au sommet du pylône.

3. Groupe de pylônes selon la revendication 1 ou 2, **caractérisé en ce que** la pièce de maintien (1), en particulier la colonne portante (4) de cette dernière, est raccordée au bras de charge et un entraînement linéaire est raccordé au bras de force du levier à deux bras.

4. Groupe de pylônes selon l'une quelconque des revendications 1 à 3, **caractérisé en ce que** le levier se présente sous la forme d'un levier coudé (6) avec des bras de levier (2) formant de préférence un angle d'inclinaison de 135° l'un par rapport à l'autre.

5. Groupe de pylônes selon l'une quelconque des revendications 1 à 4, **caractérisé en ce que** l'entraînement linéaire pour le pivotement vers le haut comprend un moteur électrique (8) équipé d'un actionneur (9), dans lequel les entraînements de plusieurs pylônes sont raccordés à une unité de commande et de surveillance à fonctionnement synchrone.
